# EUROPEAN PATENT SPECIFICATION

(11) **EP 2 994 983 B1**
(45) Date of publication and mention of the grant of the patent: **19.04.2017**
(21) Application number: 14721502.4
(22) Date of filing: 25.03.2014
(51) Int. Cl.: H02K 53/00, H02K 49/10, H02K 7/06

(54) **MECHANICAL TRANSDUCER**
MECHANICHER ENERGIEWANDLER
TRANSDUCTEUR MÉCHANIQUE

(30) Priority: 10.05.2013 IT BG20130014
(43) Date of publication of application: 16.03.2016
(73) Proprietor: Palermo, Pasquale Maurizio, 91014 Castellammare Del Golfo (TP) (IT)
(72) Inventor: Palermo, Pasquale Maurizio, 91014 Castellammare Del Golfo (TP) (IT)
(74) Representative: Gatti, Enrico
(86) International application number: PCT/IB2014/060124
(87) International publication number: WO 2014/181201

(56) References cited:
- DE-A1- 3 117 377
- JP-A- S5 698 376
- JP-A- S56 159 978
- US-A1- 2007 284 956
- US-A1- 2012 326 535

## Description

The present invention relates to a mechanical transducer which transforms pneumatic energy (pressure) into rotational energy, the transducer also transforms linear motion into rotary motion.

As known, conventional engines are mainly based on fossil fuels.

All these engines have the disadvantage of being the cause of pollution and depletion of land resources.

Purpose of the present invention is to provide a transducer, which transforms pneumatic energy into rotational energy, which obviates the drawbacks of the known art. Document DE3117377 discloses a related transducer for converting pneumatic energy into rotational energy. Another purpose is to provide a transducer, which transforms pneumatic energy into rotational energy, of simple implementation.

According to the present invention, these and other objects are achieved by a mechanical transducer for converting pneumatic energy into rotational energy comprising: a fixing structure of said transducer; a shaft; a first disc; a second disc and a third disc arranged in succession and associated to said shaft; said first, second and third disc having means adapted to slide longitudinally along said shaft; said shaft being able to rotate freely at the center of said first and third disc; said shaft being in rotation with said second disc; said first and third disc having means which cooperate with said structure to lock their rotation about said shaft; said first disc having a first plurality of magnets arranged on its inner surface facing said second disc; said third disc having a second plurality of magnets arranged on its inner surface facing said second disc; said second disc having a third plurality of magnets arranged on its surface facing said first disc; said second disc having a fourth plurality of magnets arranged on its surface facing said third disc; said first and fourth plurality of magnets being opposed and having opposite pole to said second and third plurality of magnets.

Further characteristics of the invention are described in the dependent claims.

The advantages of this solution with respect to the solutions of the prior art are various.

The transducer or engine according to the present invention has no need of fuel, as far as possible, to operate and does not need all the other parts which an internal combustion engine requires such as the fuel tank, the radiator, etc.. It is very quiet. It does not produce any kind of pollution (e.g. carbon dioxide and noise pollution).

It can be an alternative to any type of internal combustion engine, for example for cars, motorcycles, boats, aircraft.

It produces clean energy and thus with zero impact. It can be applied where a driving force is required such as to produce electrical energy by replacing, as far as possible, the internal combustion engine of a generator having no fuel costs and without polluting, with the advantage that the magnetic field of the magnets has a duration of about 300 years. It can also be used to produce electricity, by applying a generator for mobile phones, torches, PCs, portable radios, etc..

The characteristics and advantages of the present invention will become apparent from the following detailed description of an embodiment thereof, that is illustrated by way of non-limiting example in the accompanying drawings, wherein:

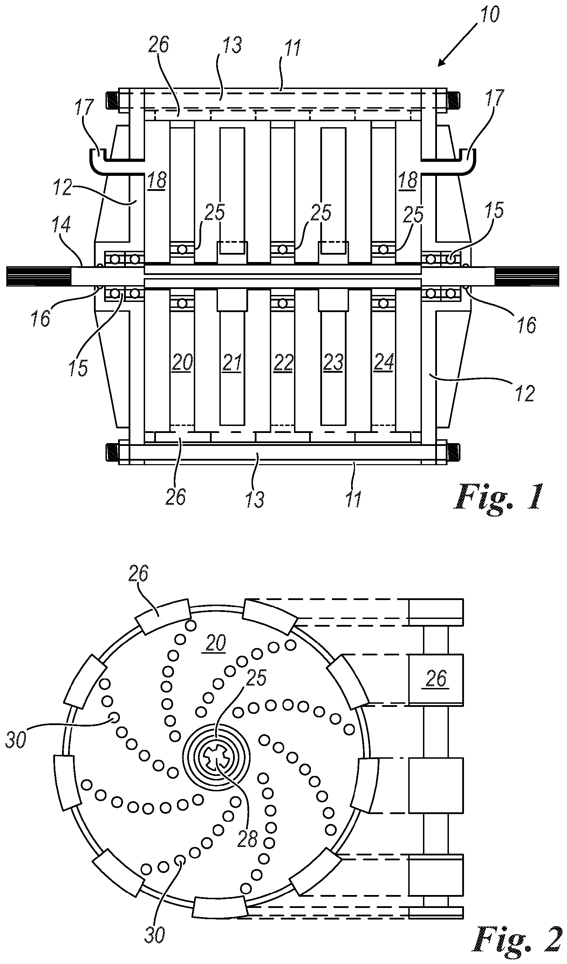

Figure 1 shows schematically an engine, seen from the front and in section, according to the present invention;
Figure 2 shows schematically a fixed disc of an engine, seen from one side, according to the present invention;
Figure 3 shows schematically a mobile disc of an engine, seen from one side, according to the present invention;
Figure 4 shows schematically a portion of a disc of an engine, seen from the front, according to the present invention;

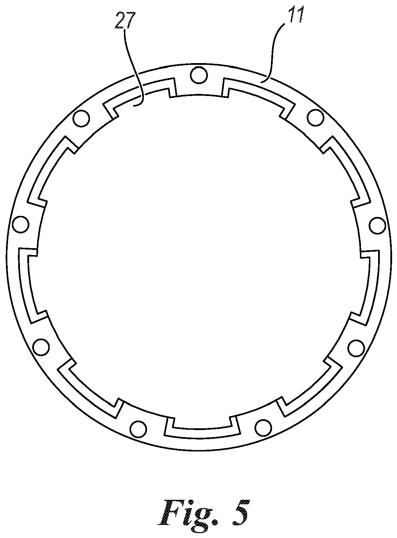

Figure 5 shows schematically a container of an engine, seen from one side in section, according to the present invention.

Referring to the attached figures, a transducer, according to the present invention, comprises a containing structure 10 of a substantially cylindrical shape, having a tubular wall 11 laterally closed by two circular plates 12.

The circular plates 12 are fixed to the tubular wall by means of bolts 13.

The containing structure 10 is moved from side to side by a drive shaft 14.

The shaft 14 can rotate by means of bearings 15 mounted on the two circular plates 12.

Downstream of the bearings 15 there is a gasket of O-ring type 16, one on each side.

On the shaft 14, within the containing structure 10, a series of circular discs in a number equal to or greater than two is provided. In the attached figures are shown five discs 20-24.

The circular plates 12 comprise at least a duct 17, and in the attached figures two, one for each plate, which connect the area 18 that is created inside the tubular wall 11, between the plates 12 and the discs 20 and 24, and the outside.

The discs are of two types, arranged in succession alternate one with the other.

A first type are the discs 20, 22 and 24 which are fixed discs, and a second type are the discs 21 and 23 which are mobile discs.

In particular, the discs 20, 22 and 24 are discs that have the circumference fixed to the tubular wall 11 and the shaft 14 can rotate without problems because each disc 20, 22 and 24 has respective bearings 25. Inside the bearings 25 a toothing 28 is provided which cooperates with corresponding longitudinal grooves arranged on the shaft 14, so that the discs 20, 22 and 24 can freely slide longitudinally along the shaft 14, while remaining stable in their seats.

In particular, on the circumference of the discs 20, 22 and 24 teeth 26 are provided which extend from the circumference and are arranged in a predetermined number for example, in the equally spaced number of nine.

The teeth 26, beside extending from the circumference of the discs 20, 22 and 24, also have a thickness greater than that of the discs themselves. They have a size such that if two of the discs 20, 22 and 24 approach each other the teeth 26 are touching each other while leaving a minimum of space (for example a millimeter) to the intermediate disc thereto, to be able to rotate without interference.

The inner wall of the tubular wall 11 comprises recesses 27, in the equally spaced number of nine, one with respect to the other, longitudinal to the wall 11 itself.

The teeth 26 are positioned in the recesses 27 so that the discs 20, 22 and 24 are locked in rotation with respect to the shaft 14, but can slide longitudinally to the wall 11 and towards, or away from one with respect to the other.

The discs 21, 23 are mobile discs fixed to the shaft 14, and therefore rotating around the shaft 14. Said discs 21 and 23 have a diameter slightly less than the diameter of the tubular wall 11, so that they can rotate without interfering therewith. In particular, they are fixed to the shaft 14 by means of a toothing 28 of the disc that cooperates with recesses arranged on the shaft, so that the discs 21 and 23 can freely slide longitudinally along the shaft 14 while remaining attached thereto for their rotational movement.

All the discs 20-24 comprise a plurality of magnets 30 fixed in an appropriate way thereon.

The bearings 25, preferably those associated with the external discs 20 and 24 are sealed bearings.

On each face of each disc, there are, for example, as shown in the figures, eight sets of magnets 30 arranged, preferably, in succession to form spiral rays, each having eight magnets. This provision allows to obtain a good rotation smoothness.

The magnets 30 are for example of the neodymium type and are preferably arranged at an angle of 45°, and with opposite polarities on discs having lateral surfaces set side by side, so that each magnet has to oppose to a magnet correspondingly inclined and having opposite polarity.

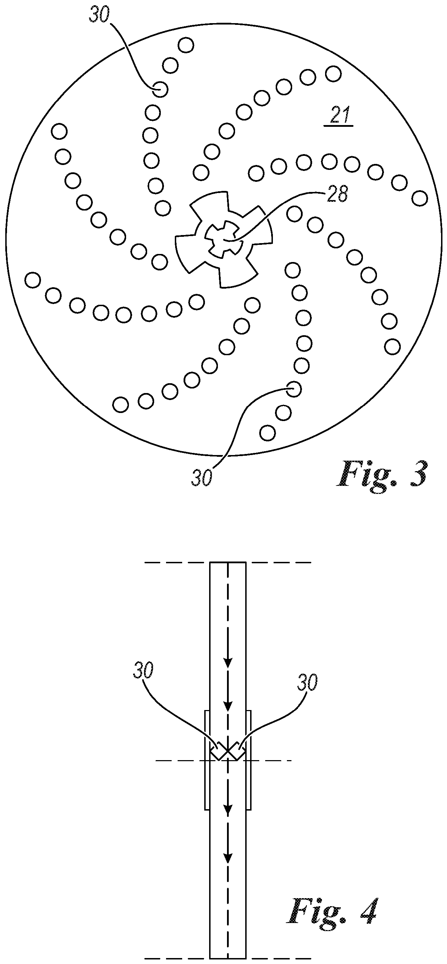

The magnets 30 of the intermediate discs 21-23 are arranged as in Figure 4, each preferably inclined by 45°. In particular the discs 21 and 23 have the magnets on the left (set side by side respectively to the disc 20 and 22) inclined upwards by 45° and the positive pole towards the outside, and the magnets on the right (set side by side respectively to the disc 22 and 24) inclined upwards by 45° and the negative pole towards the outside.

The magnets 30 of the disc 22 are arranged as in Figure 4, each inclined by 45°. In particular, the disc 22 has the magnets on the left (set side by side to the disc 21) inclined downwards by 45° and the negative pole towards the outside, and the magnets of the right (set side by side to the disc 23) inclined downwards by 45° and the positive pole towards the outside.

The magnets 30 of the disc 20 are arranged only on its right side (set side by side to the disc 21) inclined downwards by 45° and the positive pole towards the outside.

The magnets 30 of the disc 24 are arranged only on its left side (set side by side to the disc 23) inclined downwards by 45° and the negative pole towards the outside.

Preferably, the fastening of each magnet provides a hole in the disc and the insertion of the magnet therein, with a portion that extends outside the disc itself and secured in the hole by glue or other.

The size and number of magnets may be varied according to the needs.

For the discs has been used aluminum since it does not alter the magnetic field of the magnets, but other materials with these characteristics may be used.

For the toothing 28 a steel insert is preferably used.

The operation of the invention is apparent to the skilled in the art from what has been described and, in particular, is the following.

The engine acts according to a driving force exploiting permanent magnetic fields of the different magnets.

Both the circular fixed discs and the circular rotating ones have a certain distance one with respect to the other. This distance is determined by the repulsive force of the magnets, and must be such as to ensure that, at rest, the repelling force between them has no real effect, and in this way the engine is stopped.

To start the engine, it is necessary to pump a fluid in the tubing 17 so as to increase the internal pressure in the areas 18 and push the discs 20 and 24 towards the inside of the engine. The area 18 is made so that it is watertight and can maintain confined in its inside the fluid entering therein.

Because of the repelling forces of the magnets, the discs will move towards the inside of the engine and therefore will approach all discs therein.

In this way the interactions between the magnets will increase, and the fixed discs 20, 22 and 24 will rotate the mobile discs 21 and 23 by rotating the shaft 14.

The positioning of the magnets is made so that there will always be a magnet aligned with another magnet of the adjacent disc, then by approaching the discs the repelling force increases concentrating the same only on rotating discs thus allowing the rotation thereto, and consequently of the drive shaft.

In the embodiment here described the magnets are oriented by 45°, but other angles can be used, making sure that the magnets of adjacent discs are in opposition.

To increase the speed of the engine it will be necessary to increase the pressure within the areas 18 and thus bring together the discs, to reduce or to stop the engine it is necessary to reduce or eliminate the pressure in the areas 18, the discs will move away from each other, the magnets will be at a distance so as not to interfere with each other and the engine will stop.

The sliding of the discs 20-24 longitudinally along the shaft 14 may be due to their central toothing 28.

As the fluid pressure increases within the chambers 18, the discs approach each other. The width of the teeth 26 determines the limit stop of the disc approach so that the intermediate discs 21 and 23 can rotate without interfering with the near ones.

The drive shaft may be connected to any mechanism that is wanted to be used, from a car to an electric generator for producing electricity, as far as possible.

The size of the transducer, and therefore of the magnets and the number of discs may vary according to necessity.

As fluid, oil, air or other can be used along with appropriate pumps and valves is to be connected to the tubes 17.

On the shaft and where necessary appropriate fluid seals may be positioned.

## Claims

1. A mechanical transducer to convert pneumatic energy into rotational energy comprising: a fixing structure of said transducer; a shaft; (14) a first disc, (20) a second disc (22) and a third disc (24) arranged in succession and associated to said shaft; said first, second and third disc having means able to slide longitudinally along said shaft; (14) said shaft being able to rotate freely at the center of said first and third disc; said shaft being in rotation with said second disc; said first and third disc having means which cooperate with said structure to lock their rotation about said shaft; said first disc having a first plurality of magnets arranged on its inner surface facing said second disc; said third disc having a second plurality of magnets (30) arranged on its inner surface facing said second disc; said second disc having a third plurality of magnets arranged on its surface facing said first disc; said second disc having a fourth plurality of magnets arranged on its surface facing said third disc; said first and fourth plurality of magnets being opposed and having opposite pole to said second and third plurality of magnets.

2. The transducer according to claim 1 **characterized in that** said means able to slide longitudinally along said shaft (14) comprise a toothing which cooperates with corresponding longitudinal grooves arranged on the shaft.

3. The transducer according to one of the preceding claims **characterized in that** said shaft is able to rotate freely at the center of said first and third disc by means of bearings.

4. The transducer according to one of the preceding claims **characterized in that** said shaft is in rotation with said second disc by means of a toothing arranged on said second disc which cooperates with corresponding longitudinal grooves arranged on the shaft.

5. The transducer according to one of the preceding claims **characterized in that** said means which cooperate with said structure to lock their rotation about said shaft, comprise at least one tooth which extends from said first and third disc adapted to cooperate with at least one corresponding longitudinal recess arranged on said structure which allows the longitudinal displacement of said first and third disc.

6. The transducer according to one of the preceding claims **characterized in that** said first and third disc comprise at least one tooth which extends from said first and third disc adapted to cooperate with at least one corresponding longitudinal groove arranged on the said structure; the width of said tooth is greater than or equal to the width of said second disc.

7. The transducer according to one of the preceding claims **characterized in that** said engine comprises means to approach and separate said first and third disc from said second disc.

8. The transducer according to claim 7 **characterized in that** said fixing structure of said transducer is a closed structure; said structure comprises at least a conduit to put in communication the outside with an area that is created between the surface of said first disc opposite to said second disc and the inner surface of said structure; in said conduit a fluid at a predefined pressure is introduced.

## Patentansprüche

1. Ein mechanischer Energiewandler zur Verwandlung von pneumatischer Energie in Rotationsenergie, welcher Folgendes umfasst: eine Befestigungsstruktur des genannten Energiewandlers; eine Welle (14); eine erste Scheibe (20), eine zweite Scheibe (22) und eine dritte Scheibe (24), welche jeweils der Reihenfolge nach angeordnet und mit der genannten Welle verbunden sind, wobei die erste zweite und dritte Scheibe jeweils Elemente aufweisen, welche geeignet sind, längs an der genannten Welle (14) entlang zu gleiten; wobei die genannte Welle in der Lage ist, sich frei in der Mitte der genannten ersten und dritten Scheibe zu drehen; wobei die genannte Welle sich mit der genannten zweiten Scheibe in Drehung befindet; wobei die genannte erste und dritte Scheibe jeweils Elemente aufweisen, die mit der genannten Struktur kooperieren, um deren Drehung um die genannte Welle zu arretieren; wobei die genannte erste Scheibe eine erste Vielzahl von Magneten aufweist, welche jeweils an ihrer inneren Oberfläche angeordnet sind, die der genannten zweiten Scheibe gegenüberliegt; wobei die genannte dritte Scheibe eine zweite Vielzahl von Magneten (30) aufweist, welche jeweils an ihrer inneren Oberfläche angeordnet sind, die der genannten zweiten Scheibe gegenüberliegt; wobei die genannte zweite Scheibe jeweils eine dritte Vielzahl von Magneten aufweist, welche an ihrer Oberfläche angeordnet sind, die der genannten ersten Scheibe gegenüberliegt; wobei die genannte zweite Scheibe jeweils eine vierte Vielzahl von Magneten aufweist, welche an ihrer Oberfläche angeordnet sind, die der genannten dritten Scheibe gegenüberliegt; wobei die genannte erste und vierte Vielzahl von Magneten sich jeweils gegenüberliegen und einen dieser zweiten und dritten Vielzahl von Magneten entgegengesetzten Pol aufweisen.

2. Der Energiewandler gemäß Anspruch 1, **dadurch gekennzeichnet, dass** die genannten Elemente, welche in der Lage sind, längs an der genannten Welle (14) entlang zu gleiten, eine Verzahnung umfassen, die jeweils mit entsprechenden Längsrillen kooperiert, welche an der Welle angeordnet sind.

3. Der Energiewandler gemäß einem der vorausgegangenen Ansprüche, **dadurch gekennzeichnet, dass** die genannte Welle in der Lage ist, frei in der Mitte der genannten ersten und dritten Scheibe zu rotieren, und zwar mit Hilfe von Lagern.

4. Der Energiewandler gemäß einem der vorausgegangenen Ansprüche, **dadurch gekennzeichnet, dass** die genannte Welle sich in Rotation mit der genannten zweiten Scheibe befindet, und zwar mit Hilfe einer Verzahnung, welche auf der genannten zweiten Scheibe angeordnet ist, die mit entsprechenden Längsrillen kooperiert, die an der Welle angeordnet sind.

5. Der Energiewandler gemäß einem der vorausgegangenen Ansprüche, **dadurch gekennzeichnet, dass** die genannten Elemente, welche mit der genannten Struktur zur Arretierung ihrer Umdrehung um die genannte Welle kooperiert, mindestens einen Zahn umfassen, der sich von der genannten ersten und dritten Scheibe erstreckt und geeignet ist, mit mindestens einer entsprechenden Längsaussparung zu kooperieren, welche auf der genannten Struktur angeordnet ist, die die Längsverschiebung der genannten ersten und dritten Scheibe gestattet.

6. Der Energiewandler gemäß einem der vorausgegangenen Ansprüche, **dadurch gekennzeichnet, dass** die genannte erste und dritte Scheibe jeweils mindestens einen Zahn umfassen, welcher sich von der genannten ersten und dritten Scheibe erstreckt und geeignet ist, mit mindestens einer entsprechenden Längsrille zu kooperieren, die auf der genannten Struktur angeordnet ist; die Breite des genannten Zahns ist dabei jeweils größer als die Breite der genannten zweiten Scheibe beziehungsweise genauso groß.

7. Der Energiewandler gemäß einem der vorausgegangenen Ansprüche, **dadurch gekennzeichnet, dass** die genannte Maschine Elemente umfasst, um die genannte erste und dritte Scheibe jeweils von der genannten zweiten Scheibe zu trennen beziehungsweise sie dieser anzunähern.

8. Der Energiewandler gemäß Anspruch 7, **dadurch gekennzeichnet, dass** die genannte Befestigungsstruktur des genannten Energiewandlers eine geschlossene Struktur ist; die genannte Struktur umfasst dabei mindestens ein Leitungsrohr, um die Außenseite mit dem Bereich in Verbindung zu setzen, der zwischen der Oberfläche der genannten ersten Scheibe gegenüber der genannten zweiten Scheibe und der inneren Oberfläche der genannten Struktur gebildet wird; in dieses Leitungsrohr wird ein Fluid mit vorbestimmtem Druck eingeleitet.

## Revendications

1. Transducteur mécanique pour convertir une énergie pneumatique en énergie de rotation, comprenant: une structure de fixation dudit transducteur; un arbre (14); un premier disque (20), un deuxième disque (22) et un troisième disque (24) agencés en succession et associés audit arbre; lesdits premier, deuxième et troisième disques ayant des moyens adaptés pour coulisser longitudinalement le long dudit arbre (14); ledit arbre étant adapté pour tourner librement au centre desdits premier et troisième disques; ledit arbre étant en rotation avec ledit deuxième disque; lesdits premier et troisième disques ayant des moyens qui coopèrent avec ladite structure pour bloquer leur rotation autour dudit arbre; ledit premier disque ayant une première pluralité d'aimants agencée sur sa surface intérieure faisant face audit deuxième disque; ledit troisième disque ayant une deuxième pluralité d'aimants (30) agencée sur sa surface intérieure faisant face audit deuxième disque; ledit deuxième disque ayant une troisième pluralité d'aimants agencée sur sa surface faisant face audit premier disque; ledit deuxième disque ayant une quatrième pluralité d'aimants agencée sur sa surface faisant face audit troisième disque; lesdites première et quatrième pluralités d'aimants étant opposées et ayant des pôles opposés auxdites deuxième et troisième pluralités d'aimants.

2. Transducteur selon la revendication 1, **caractérisé en ce que** lesdits moyens adaptés pour coulisser longitudinalement le long dudit arbre (14) comprennent une denture qui coopère avec des rainures longitudinales correspondantes agencées sur l'arbre.

3. Transducteur selon une des revendications précédentes, **caractérisé en ce que** ledit arbre est adapté pour tourner librement au centre desdits premier et troisième disques au moyen de paliers.

4. Transducteur selon une des revendications précédentes, **caractérisé en ce que** ledit arbre est en rotation avec ledit deuxième disque au moyen d'une denture agencée sur ledit deuxième disque qui coopère avec des rainures longitudinales correspondantes agencées sur l'arbre.

5. Transducteur selon une des revendications précédentes, **caractérisé en ce que** lesdits moyens qui coopèrent avec ladite structure pour bloquer leur rotation autour dudit arbre comprennent au moins une dent qui s'étend à partir desdits premier et troisième disques, adaptée pour coopérer avec au moins un évidement longitudinal correspondant agencé sur ladite structure, qui permet le déplacement longitudinal desdits premier et troisième disques.

6. Transducteur selon une des revendications précédentes, **caractérisé en ce que** lesdits premier et troisième disques comprennent au moins une dent qui s'étend à partir desdits premier et troisième disques, adaptée pour coopérer avec au moins une rainure longitudinale correspondante agencée sur ladite structure; la largeur de ladite dent est supérieure ou égale à la largeur dudit deuxième disque.

7. Transducteur selon une des revendications précédentes, **caractérisé en ce que** ledit moteur comprend des moyens pour rapprocher et séparer lesdits premier et troisième disques dudit deuxième disque.

8. Transducteur selon la revendication 7, **caractérisé en ce que** ladite structure de fixation dudit transducteur est une structure fermée; ladite structure comprend au moins un conduit pour mettre en communication l'extérieur avec une zone qui est créée entre la surface dudit premier disque opposée audit deuxième disque et la surface intérieure de ladite structure; un fluide à une pression prédéfinie est introduit dans ledit conduit.
